# EUROPEAN PATENT SPECIFICATION

(11) **EP 3 339 197 B1**
(45) Date of publication and mention of the grant of the patent: **04.11.2020**
(21) Application number: 17205241.7
(22) Date of filing: 04.12.2017
(51) Int. Cl.: B65B 51/30, B65B 51/22, B29C 65/36, B29C 65/74

(54) **A METHOD FOR PROVIDING TRANSVERSAL SEALS TO A TUBE OF PACKAGING MATERIAL, AND A SEALING JAW ASSEMBLY**
VERFAHREN ZUM HERSTELLEN VON QUERSIEGELNÄHTEN IN EINEM SCHLAUCHFÖRMIGEN VERPACKUNGSMATERIAL UND SIEGELBACKENANORDNUNG
MÉTHODE POUR RÉALISER DES JOINTS TRANSVERSAUX DANS UN TUBE DE MATÉRIAU D'EMBALLAGE ET ENSEMBLE DE MÂCHOIRES DE SCELLAGE

(30) Priority: 21.12.2016 EP 16205648
(43) Date of publication of application: 27.06.2018
(73) Proprietor: Tetra Laval Holdings & Finance S.A., 1009 Pully (CH)
(72) Inventor: Hecimovic, Jasmin, 22480 Lund (SE)
(74) Representative: Tetra Pak - Patent Attorneys SE

(56) References cited:
- EP-A1- 0 887 263
- EP-A1- 1 785 355
- WO-A1-00/06350
- WO-A1-2011/039710
- WO-A1-2014/154623
- US-A- 2 966 021
- US-A- 4 637 199

## Description

### FIELD OF THE INVENTION

The present invention relates to a method of providing transversal seals to a tube of packaging material, as well as a sealing jaw assembly capable of providing such transversal seals. In particular, the present invention relates to providing transversal seals in order to form irregular tetrahedral packages.

### BACKGROUND OF THE INVENTION

Irregular tetrahedral packages have been suggested by the present applicant e.g. in WO2014/154623. In short, the irregular tetrahedral packages are produced from a tube of packaging material, preferably being configured to enclose a liquid food product. The packages are formed by reforming a flat web of packaging material to a cylindrical tube, filling the tube with a product, and transversally sealing and cutting the tube, at regular intervals, into separate packages.

For this type of packages, and as is described in the above-mentioned prior art reference, the transversal seals are provided by two separate pairs of sealing jaws. These pair of sealing jaws, operating perpendicularly relative each other, are tilted slightly such that the transversal seals are provided at an angle relative the horizontal plane. The purpose of having the sealing jaw pairs angled relative the horizontal plane is to produce two types of irregular tetrahedral packages in an alternating manner, where one package is a mirror image of its immediately upstream and downstream package. By combining six packages, three of each type, it has been proven possible to arrange all six packages in the shape of a rectangular box, i.e. a six-face shape of which all faces are a rectangle, and of which each pair of adjacent faces meets at a right angle.

As is evident, these types of packages may be stored and transported extremely efficient as the packages fill almost the entire space within the rectangular box.

During sealing, the sealing jaws of each pair meet with each other such that the tube is clamped between the jaws. As the jaws are tilted relative the horizontal plane, any lateral displacement of a jaw relative the opposing jaw will also cause a corresponding vertical misalignment of the jaws. This means that if the lateral position of the jaws is not correct, there will be an increased risk of wear and damage of the parts of the sealing jaws, e.g. cutting knifes and inductors.

WO2011/039710, US4637199, EP1785355, US2966021, EP0887263 and WO 00/06350 disclose sealing jaw assemblies having pairs of sealing jaws not tilted relative to the horizontal plane.

### SUMMARY OF THE INVENTION

An object of the invention is to provide a sealing jaw assembly and a method for providing transversal seals to a tube of packaging material overcoming the above mentioned drawbacks of prior art systems and methods.

According to a first aspect a sealing jaw assembly for providing transversal seals to a tube of packaging material as claimed in claim 1 is provided. According to a second aspect a method for providing transversal seals to a tube of packaging material as claimed in claim 5 is provided.

### BRIEF DESCRIPTION OF THE DRAWINGS

The description of the invention will be more easily understood when read together with the accompanying drawings, in which
Fig. 1 is an isometric view of a tube of packaging material during production of individual irregular tetrahedral packages;
Fig. 2 is an isometric view of a sequence of irregular tetrahedral packages; and
Figs 3a to 3c respectively show a top view of a sealing jaw assembly for providing transversal seals to a tube of packaging material according to an example. Figs. 3a shows two sealing jaws in a non-engaged starting stage, whereas Fig. 3b shows the two sealing jaws in an intermediate stage and Fig. 3c shows the two sealing jaws in an operative stage or position for providing a transversal seal to the tube;
Fig. 4 shows a sealing jaw assembly in which the sealing jaws in their operative position for providing a seal is tilted against a plane perpendicular to the longitudinal extension of the tube, whereas the first and second guide mating members are longitudinally arranged;
Fig. 5a shows an isometric view of a first guide mating member; and
Fig. 5b shows an isometric view of a second guide mating member for receiving the first guide mating member.

### DETAILED DESCRIPTION

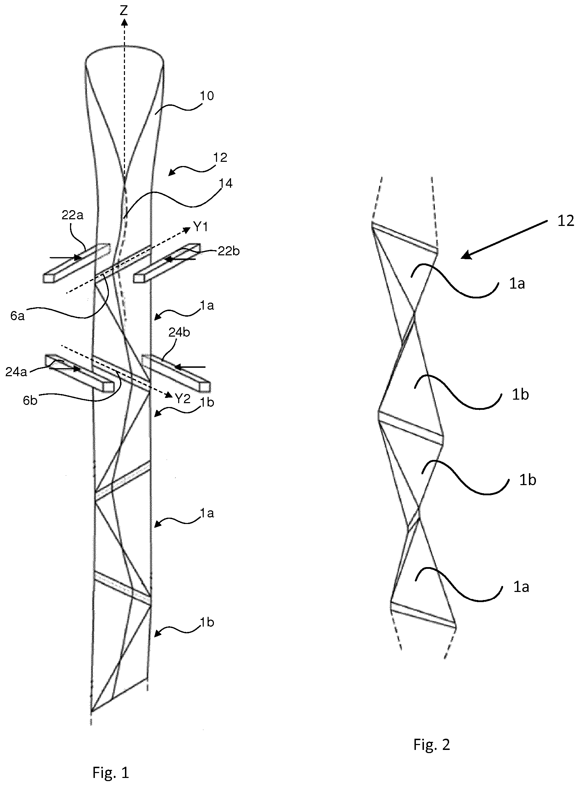

Fig. 1 shows a conventional sealing jaw assembly producing irregular tetrahedral packages, whereas Fig. 2 shows an isometric view of a sequence of irregular tetrahedral packages produced by the sealing jaw assembly of Fig. 1. The pairs of sealing jaws (22a-b, 24a-b) are mounted for reciprocal motion toward and away from one another, as is indicated with arrows on each jaw. The jaws of one pair when moved toward each other act to compress and flatten a tube 12 of packaging material so as to adhere opposed interior surfaces of the packaging material 10 together to achieve a seal 6a, 6b of the tubular material along a seam line or sealing axis Y1, Y2 which intersects the longitudinal axis Z of the tubular material. Adjacent pairs of jaws 22a-b, 24a-b may e.g. be oriented that they meet and make a seal in planes which are perpendicular to one another, i.e. Y1 is perpendicular to Y2. However, adjacent pairs of jaws may also be oriented such that their respective seal planes are not perpendicular to each other.

In order to achieve the unique irregularity of the tetrahedral shape of the packages 1a, 1b, each pair of jaws is also so oriented when moving to and away from each other as to lie in a plane which has a predetermined angular relationship to the longitudinal axis of the tube 12 so that the sealing axis Y1, Y2 of the transversal sealing achieved by each pair of jaws has the same predetermined angular relationship to the longitudinal axis Z of the tube 12 of packaging material.

Multiple pairs of sealing jaws may be provided in a sealing assembly. For example, the sealing jaw assembly shown in Fig. 1 could be equipped with additional pairs of sealing jaws whereby a pair of sealing jaws, identical to the pair of sealing jaws 22a-b, is arranged downstream the pair of sealing jaws 24a-b, etc. During a sealing step, every second pair of jaws 22a-b perform the same movement along the same plane and with the same optional angle. The remaining pair of jaws 24a-b perform the same movement along the same plane and with the same optional angle, but the direction of movement towards the tube of packaging material is arranged at an angle relative to the reciprocating movement of the jaws 22a-b. This means that the planes of the transversal seals made with jaws 22a-b are angled relative to the planes of the transversal seals made with jaws 24a-b.

In Fig. 1, a longitudinal central axis Z of the tube of packaging material has been indicated, which in normal production is vertical. All the transversal seals, made with the pairs of sealing jaws, intersect said longitudinal axis Z.

Each transversal seal 6a, 6b form a top sealed edge of a first package and a bottom sealed edge of a second package after the tube of packaging material has been subsequently cut along approximately the median line of each transversal seal 6a, 6b by any suitable means, such as a knife, thereby separating the sealed tube 12 into individual packages 1a, 1b.

In Fig. 1, it may appear that the tube 12 of packaging material is stationary and the jaws 22a.b, 24a-b provide the transversal sealings 6a, 6b at different positions. This is not the case in normal production, however, where each sealing jaw 22a-b, 24a-b makes contact with the tube 12 of packaging material at an almost constant position (position along Z), and the tube 12 is then pulled down allowing for a new sealing jaw 22a-b, 24a-b to again make a transversal seal 6a, 6b at the same position along Z as the previous jaw. This pulling action of the sealing jaws 22a-b, 24a-b on the tube 12 is what feeds the web 10 of packaging material through the machine. Sometimes, additional feeding rollers are provided further upstream in the filling machine, in order to reduce the tension in the web.

It should be appreciated that Fig. 1 is just a schematic representation used for illustrative purposes to explain the commonly known functionality of sealing jaws 22a-b, 24a-b for the production of irregular tetrahedral packages, and the present invention is not necessarily limited to any particularly arranged or angled sealing jaws 22a-b, 24a-b.

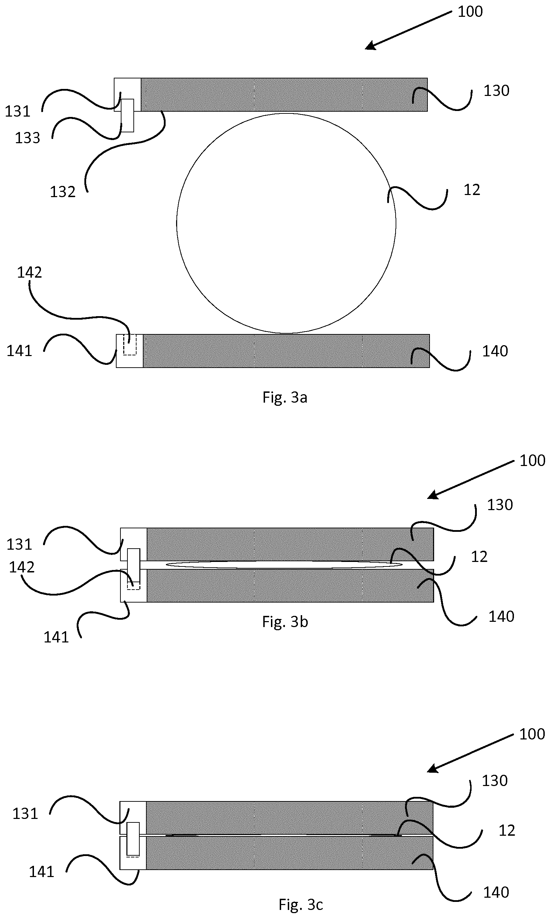

Figs. 3a to 3c respectively shows a top view of a sealing jaw assembly 100 for providing transversal seals 6 to a tube 12 of packaging material according to an example. The sealing jaw assembly 100, as explained in the following, could thus form one pair of sealing jaws 22a-b, 24a-b previously described with respect to Fig. 1. The sealing jaw assembly 100 comprises at least one pair of opposing sealing jaws 130, 140 being movable relative each other to provide a transversal seal 6 (see Fig. 1) to the tube 12 when the tube passes between the sealing jaws 130, 140. The pair of opposing sealing jaws 130, 140 comprises a first sealing jaw 130 having a first guide mating member 131 protruding beyond a sealing surface 132 of the first sealing jaw 130. A second sealing jaw 140 is provided with a second guide mating member 141 for receiving the first guide mating member 131 when the first sealing jaw 130 and the second sealing jaw 140 move towards each other, as shown in Figs. 3b and 3c, thereby properly aligning the at least one pair of opposing sealing jaws 130, 140.

As shown in Figs 3b and 3c the second guide mating member 141 receives the first guide mating member 131 before the first sealing jaw 130 and second sealing jaw 140 attains their operative position for providing a transversal seal, i.e. their sealing end position, as shown in Fig. 3c. In this way the first sealing jaw 130and the second sealing jaw 140 may be properly aligned in relation to each other.

As shown in Figs. 3b and 3c the tube 12 is pressed together when the two sealing jaws 130, 140 move towards each other.

Proper alignment is of particular importance in situations where the sealing jaws 130, 140 are tilted at an angle in relation to the horizontal plane. By tilting is here meant that the width direction of each sealing jaw 130, 140 is angled against the horizontal plane. A horizontal sealing surface misalignment between the sealing jaws 130, 140 in such a tilted configuration will have an adverse impact on the sealing as well as the components used to perform the sealing. In a conventional system where the sealing jaws 130, 140 are arranged along the horizontal plane, i.e. the width direction is parallel to the horizontal plane, a horizontal sealing surface misalignment between two sealing jaws will not affect the sealing or the components in the same negative way.

The second guide mating member 141 comprises an opening 142 for receiving a protrusion 133 of the first guide mating member 131.

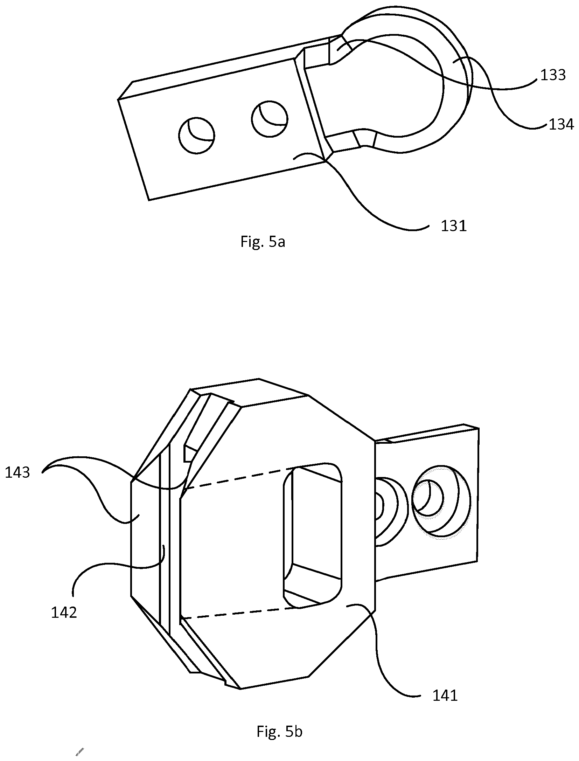

With reference to Figs. 5a and 5b in view of Figs. 3a to 3c, the second guide mating member 141 comprises at least one chamfered edge 143 arranged adjacent the opening 142 for guiding the protrusion 133 into the opening 142 when the first sealing jaw 130 and second sealing jaw 140 move towards each other.

As shown in Fig. 5a the protrusion 133 comprises a rounded end portion 134. The opening 142 may have shape for providing a tight sliding fit when the protrusion 133 is received by the opening before the sealing jaws 130, 140 attains their sealing position as shown in Fig. 3c. This means that the opening 142 does not necessarily has an exact corresponding rounded portion to that of the protrusion 133 since the first guide mating member 131 may approach the second guide mating member along an arc path in a plane being parallel to the longitudinal extension L of the tube 12. Hence, the guiding members 131, 141 can be joined together at different angles, off- set to each other in a horizontal and/or vertical plane, but still align the sealing jaws 130, 140 to close perpendicular to each other.

As shown in Figs. 5a and 5b the respective guide mating member 131, 141 may be attached to their associated sealing jaw 130, 140 by means of screw holes provided therethrough. A conventional screw (not shown) may thus be used to attach each guide mating member 131, 141 to a respective said surface of the associated sealing jaw 130, 140.

Either the first sealing jaw 130 or second sealing jaw 140 may comprise an induction heating circuit for providing the transversal seal 6 to the tube. Moreover, either the first sealing jaw 130 or second sealing jaw 140 may comprise a knife for cutting the tube along the transversal seal 6.

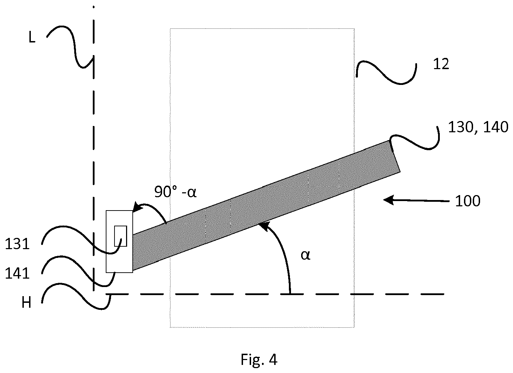

Fig. 4 shows a side view of two sealing jaws 130, 140 being in the sealing position as shown in Fig. 3c. In Fig. 4, it is noted that the sealing jaws in the sealing position are tilted against the horizontal axis H, which means that their direction of width is angled at an angle α against the horizontal plane. The longitudinal extension of the tube 12 is indicated by the dotted line L in Fig. 4. Even if the sealing jaws 130, 140 are tilted against the horizontal axis H, it should be noted that the first guide mating member 131, and second guide mating member 141 are arranged such as to mate in a plane parallel to the plane comprising the arc path along which the two sealing jaws 130, 140 move towards and away from each other in use. For most systems this arc path is provided parallel to the vertical axis, which in turn is parallel to the longitudinal extension L of the tube 12. Fig. 4 shows such a configuration.

As shown in Figs 3a to 3c, the opening 142 may have two parallel arranged opposing interior side walls extending parallel to the plane comprising the arc path along which the two sealing jaws 130, 140 move in use. Analogously, the protrusion 133 may have two parallel opposing outer surfaces also arranged parallel to the plane comprising the arc path along which the two sealing jaws 130, 140 move in use. Upon mating the parallel opposing interior surfaces of the opening will receive the parallel opposing outer surfaces of the protrusion 133, thereby preventing the first guide mating member 131, and the second guide mating member 132 to move in a direction perpendicular to the plane comprising the arc path along which the two sealing jaws 130, 140 move in use. When the sealing jaws 130, 140 move along an arc path provided in a plane parallel to the vertical, the mating between the first guide mating member and the second guide mating member 132 provides for an alignment between the two sealing jaws 130, 140 and will prevent the sealing jaws 130, 140 to move relative each other in the horizontal plane.

This alignment reduces the overall wear of the system, and drastically reduces the risk of damage to the knife(s), induction heating system, and other components associated with the provision of the transversal seal.

As mentioned above, the guide mating member solution is particularly advantageous for sealing jaw assemblies, being tilted at an angle towards the horizontal or a plane being perpendicular to a longitudinal axis of the tube when arranged in their operative position for providing a transversal seal.

Accordingly, each sealing jaw 130, 140 is tilted at an angle perpendicular to the longitudinal axis of the tube 12 when in the mated end sealing position operative for providing a transversal seal. The angle may be between 15-30°, or preferably between 20-25°.

The respective arc path along which the first sealing jaw 130 and second sealing jaw 140 will move will preferably be arranged in a common plane.

A method for providing a transversal seal to a tube 12 of packaging material may comprise the following: providing a first pair of opposing sealing jaws 130, 140 being movable relative each other upon activation, wherein a first sealing jaw 130 thereof having a first guide mating member 131 protruding from a sealing surface 132 of the first sealing jaw 130, and a second sealing jaw 140 thereof having a second guide mating member 141 for receiving the first guide mating member 131 when the first sealing jaw 130 and the second sealing jaw 140 move towards each other, thereby properly aligning the at least one pair of opposing sealing jaws 130, 140. The method may further comprise activating said first pairs of sealing jaws such as to provide a transversal seal 6 to the tube 12 when the tube passes between the sealing jaws 130, 140.

Although the drawings have been shown in relation to a single opposing pair of sealing jaws 130, 140 for simplicity, it should be appreciated that any number of sealing jaw pairs could be used without departing from the inventive aspects of the present invention, as long as at least one of such sealing jaw pairs is provided with the first and second guide mating members as disclosed in the appended claims.

## Claims

1. A sealing jaw assembly (100) for providing transversal seals (6) to a tube (12) of packaging material, said sealing jaw assembly (100) comprising
at least one pair of opposing sealing jaws (130, 140) being movable relative each other to provide a transversal seal (6) to the tube (12) when the tube (12) is arranged between the sealing jaws (130, 140),
wherein the at least one pair of opposing sealing jaws (130, 140) comprises
a first sealing jaw (130) having a first guide mating member (131) having a part (133) protruding from a sealing surface (132) of the first sealing jaw (130), and
a second sealing jaw (140) having a second guide mating member (141) for receiving the first guide mating member (131) when the first sealing jaw (130) and the second sealing jaw (140) move towards each other and thereby aligning the at least one pair of opposing sealing jaws (130, 140);
wherein the sealing jaws (130, 140) when arranged in their operative position for providing a transversal seal (6) are tilted relative a plane (H) being perpendicular to a longitudinal axis (Z) of tube (12);
wherein the second guide mating member (141) comprises an opening (142) for receiving a protrusion (133) of the first guide mating member (131);
wherein the second guide mating member (141) comprises at least one chamfered edge (143) arranged adjacent the opening (142) for guiding the protrusion (133) into the opening (142) when the first sealing jaw (130) and second sealing jaw (140) move towards each other;
and wherein the protrusion (133) comprises a rounded end portion (134).

2. The sealing jaw assembly (100) according to claim 1, wherein either the first sealing jaw (130) or second sealing jaw (140) comprises an induction heating circuit for providing the transversal seal (6) to the tube (12).

3. The sealing jaw assembly (100) according to any one of the previous claims, wherein either the first sealing jaw (130) or second sealing jaw (140) comprises a knife for cutting the tube (12) along the transversal seal (6).

4. The sealing jaw assembly (100) according to any of the previous claims, wherein the first sealing jaw (130) and the second sealing jaw (140) are arranged to move along a respective arc path, the arc paths being comprised in a common plane.

5. A method for providing transversal seals (6) to a tube (12) of packaging material, comprising
providing a first pair of opposing sealing jaws (130, 140) being movable relative each other upon activation, wherein
a first sealing jaw (130) thereof having a first guide mating member (131) having a part (133) protruding from a sealing surface (132) of the first sealing jaw (130), and
a second sealing jaw (140) thereof having a second guide mating member (141) for receiving the first guide mating member (131) when the first sealing jaw (130) and the second sealing jaw (140) move towards each other, thereby properly aligning the at least one pair of opposing sealing jaws (130, 140), and
activating said first pairs of sealing jaws (130, 140) such as to provide a transversal seal (6) to the tube (12) when the tube (12) is arranged between the sealing jaws (130, 140);
wherein the sealing jaws (130, 140) when arranged in their operative position for providing a transversal seal (6) are tilted relative a plane (H) being perpendicular to a longitudinal axis (Z) of tube (12);
wherein the second guide mating member (141) comprises an opening (142) for receiving a protrusion (133) of the first guide mating member (131);
wherein the second guide mating member (141) comprises at least one chamfered edge (143) arranged adjacent the opening (142) for guiding the protrusion (133) into the opening (142) when the first sealing jaw (130) and second sealing jaw (140) move towards each other;
and wherein the protrusion (133) comprises a rounded end portion (134).

## Patentansprüche

1. Siegelbackenanordnung (100) zum Bereitstellen von Querversiegelungen (6) an einer Röhre (12) aus Verpackungsmaterial, wobei die Siegelbackenanordnung (100) umfasst:
mindestens ein Paar gegenüberliegender Siegelbacken (130, 140), die relativ zueinander beweglich sind, um eine Querversiegelung (6) an der Röhre (12) zu schaffen, wenn die Röhre (12) zwischen den Siegelbacken (130, 140) angeordnet ist,
wobei das mindestens eine Paar gegenüberliegender Siegelbacken (130, 140) umfasst:
eine erste Siegelbacke (130) das ein erstes Führungsgegenstück (131) mit einem Teil (133) aufweist, der von einer Siegelfläche (132) der ersten Siegelbacke (130) vorsteht, und
eine zweite Siegelbacke (140) mit einem zweiten Führungsgegenstück (141) zum Aufnehmen des ersten Führungsgegenstücks (131), wenn sich die erste Siegelbacke (130) und die zweite Siegelbacke (140) aufeinander zubewegen und dadurch das mindestens eine Paar gegenüberliegender Siegelbacken (130, 140) ausrichten;
wobei die Siegelbacken (130, 140), wenn sie in ihrer Betriebsposition zum Schaffen einer Querversiegelung (6) angeordnet sind, relativ zu einer Ebene (H), die rechtwinklig zu einer Längsachse (Z) der Röhre (12) ist, geneigt sind;
wobei das zweite Führungsgegenstück (141) eine Öffnung (142) zum Aufnehmen eines Vorsprungs (133) des ersten Führungsgegenstücks (131) umfasst;
wobei das zweite Führungsgegenstück (141) mindestens eine angrenzend an die Öffnung (142) angeordnete, abgeschrägte Kante (143) zum Führen des Vorsprungs (133) in die Öffnung (142) umfasst, wenn sich die erste Siegelbacke (130) und die zweite Siegelbacke (140) aufeinander zubewegen;
und wobei der Vorsprung (133) einen abgerundeten Endabschnitt (134) umfasst.

2. Siegelbackenanordnung (100) gemäß Anspruch 1, wobei entweder die erste Siegelbacke (130) oder die zweite Siegelbacke (140) einen Induktionsheizkreis zum Bereitstellen der Querversiegelung (6) der Röhre (12) umfasst.

3. Siegelbackenanordnung (100) gemäß einem der vorhergehenden Ansprüche, wobei entweder die erste Siegelbacke (130) oder die zweite Siegelbacke (140) ein Messer zum Schneiden der Röhre (12) entlang der Querversiegelung (6) umfasst.

4. Siegelbackenanordnung (100) gemäß einem der vorhergehenden Ansprüche, wobei die erste Siegelbacke (130) und die zweite Siegelbacke (140) dazu angeordnet sind, sich entlang eines jeweiligen Bogenweges zu bewegen, wobei die Bogenwege in einer gemeinsamen Ebene liegen.

5. Verfahren zum Schaffen von Querversiegelungen (6) an einer Röhre (12) aus Verpackungsmaterial, umfassend:
Bereitstellen eines ersten Paares gegenüberliegender Siegelbacken (130, 140), die bei Aktivierung relativ zueinander beweglich sind, wobei
eine erste Siegelbacke (130) davon ein erstes Führungsgegenstück (131) mit einem Teil (133) aufweist, der von einer Siegelfläche (132) der ersten Siegelbacke (130) vorsteht, und
eine zweite Siegelbacke (140) davon ein zweites Führungsgegenstück (141) zum Aufnehmen des ersten Führungsgegenstücks (131), wenn sich die erste Siegelbacke (130) und die zweite Siegelbacke (140) aufeinander zubewegen und dabei das mindestens eine Paar gegenüberliegender Siegelbacken (130, 140) ordentlich ausrichten, aufweist, und
Aktivieren des ersten Paares von Siegelbacken (130, 140), sodass eine Querversiegelung (6) an der Röhre (12) geschaffen wird, wenn die Röhre (12) zwischen den Siegelbacken (130, 140) angeordnet ist;
wobei die Siegelbacken (130, 140), wenn sie in ihrer Betriebsposition zum Schaffen einer Querversiegelung (6) angeordnet sind, relativ zu einer Ebene (H), die rechtwinklig zu einer Längsachse (Z) der Röhre (12) ist, geneigt sind;
wobei das zweite Führungsgegenstück (141) eine Öffnung (142) zum Aufnehmen eines Vorsprungs (133) des ersten Führungsgegenstücks (131) umfasst;
wobei das zweite Führungsgegenstück (141) mindestens eine angrenzend an die Öffnung (142) angeordnete, abgeschrägte Kante (143) zum Führen des Vorsprungs (133) in die Öffnung (142) umfasst, wenn sich die erste Siegelbacke (130) und die zweite Siegelbacke (140) aufeinander zubewegen;
und wobei der Vorsprung (133) einen abgerundeten Endabschnitt (134) umfasst.

## Revendications

1. Ensemble de mâchoires de scellage (100) destiné à produire des joints transversaux (6) sur un tube (12) de matériau d'emballage, ledit ensemble de mâchoires de scellage (100) comprenant :
au moins une paire de mâchoires de scellage opposées (130, 140) mobiles l'une par rapport à l'autre pour produire un joint transversal (6) sur le tube (12) lorsque le tube (12) est disposé entre les mâchoires de scellage (130, 140),
dans lequel l'au moins une paire de mâchoires de scellage (130, 140) comprend
une première mâchoire de scellage (130) comportant un premier élément de couplage de guidage (131) ayant une partie (133) faisant saillie depuis une surface de scellage (132) de la première mâchoire de scellage (130), et
une seconde mâchoire de scellage (140) comportant un second élément de couplage de guidage (141) destiné à recevoir le premier élément de couplage de guidage (131) lorsque la première mâchoire de scellage (130) et la seconde mâchoire de scellage (140) se déplacent l'une vers l'autre, alignant ainsi l'au moins une paire de mâchoires de scellage opposées (130, 140) ;
dans lequel les mâchoires de scellage (130, 140), lorsqu'elles sont disposées dans leur position de fonctionnement pour produire un joint transversal (6), sont inclinées par rapport à un plan (H) perpendiculaire à un axe longitudinal (Z) du tube (12) ;
dans lequel le second élément de couplage de guidage (141) comprend une ouverture (142) destinée à recevoir une saillie (133) du premier élément de couplage de guidage (131) ;
dans lequel le second élément de couplage de guidage (141) comprend au moins un bord biseauté (143) disposé adjacent à l'ouverture (142) pour guider la saillie (133) dans l'ouverture (142) lorsque la première mâchoire de scellage (130) et la seconde mâchoire de scellage (140) se déplacent l'une vers l'autre ;
et dans lequel la saillie (133) comprend une partie d'extrémité arrondie (134).

2. Ensemble de mâchoires de scellage (100) selon la revendication 1, dans lequel la première mâchoire de scellage (130) ou la seconde mâchoire de scellage (140) comprend un circuit de chauffage par induction destiné à produire le joint transversal (6) sur le tube (12).

3. Ensemble de mâchoires de scellage (100) selon l'une quelconque des revendications précédentes,
dans lequel la première mâchoire de scellage (130) ou la seconde mâchoire de scellage (140) comprend un couteau destiné à découper le tube (12) le long du joint transversal (6).

4. Ensemble de mâchoires de scellage (100) selon l'une quelconque des revendications précédentes,
dans lequel la première mâchoire de scellage (130) et la seconde mâchoire de scellage (140) sont agencées pour se déplacer le long d'un trajet en arc respectif, les trajets en arc étant compris dans un plan commun.

5. Procédé de production de joints transversaux (6) sur un tube (12) de matériau d'emballage, comprenant
la fourniture d'une première paire de mâchoires de scellage opposées (130, 140) mobiles l'une par rapport à l'autre suite à une activation, comprenant
une première mâchoire de scellage (130) comportant un premier élément de couplage de guidage (131) ayant une partie (133) faisant saillie depuis une surface de scellage (132) de la première mâchoire de scellage (130), et
une seconde mâchoire de scellage (140) comportant un second élément de couplage de guidage (141) destiné à recevoir le premier élément de couplage de guidage (131) lorsque la première mâchoire de scellage (130) et la seconde mâchoire de scellage (140) se déplacent l'une vers l'autre, alignant ainsi correctement l'au moins une paire de mâchoires de scellage opposées (130, 140), et
l'activation de ladite première paire de mâchoires de scellage (130, 140) de façon à produire un joint transversal (6) sur le tube (12) lorsque le tube (12) est disposé entre les mâchoires de scellage (130, 140) ;
dans lequel les mâchoires de scellage (130, 140), lorsqu'elles sont disposées dans leur position de fonctionnement pour produire un joint transversal (6), sont inclinées par rapport à un plan (H) perpendiculaire à un axe longitudinal (Z) du tube (12) ;
dans lequel le second élément de couplage de guidage (141) comprend une ouverture (142) destinée à recevoir une saillie (133) du premier élément de couplage de guidage (131) ;
dans lequel le second élément de couplage de guidage (141) comprend au moins un bord biseauté (143) disposé adjacent à l'ouverture (142) pour guider la saillie (133) dans l'ouverture (142) lorsque la première mâchoire de scellage (130) et la seconde mâchoire de scellage (140) se déplacent l'une vers l'autre ;
et dans lequel la saillie (133) comprend une partie d'extrémité arrondie (134).
